(19) Europäisches Patentamt

European Patent Office

Office européen des brevets

(11) **EP 1 097 112 B1**

(12) **FASCICULE DE BREVET EUROPEEN**

(45) Date de publication et mention
de la délivrance du brevet:
**09.03.2005 Bulletin 2005/10**

(51) Int Cl.⁷: **C03C 4/02**, C03C 3/087,
C03C 4/08

(21) Numéro de dépôt: **99926199.3**

(22) Date de dépôt: **25.06.1999**

(86) Numéro de dépôt international:
**PCT/BE1999/000083**

(87) Numéro de publication internationale:
**WO 2000/001633 (13.01.2000 Gazette 2000/02)**

(54) **VERRE SODO-CALCIQUE VERT**

GRÜNES KALKNATRONGLAS

GREEN SODA GLASS

(84) Etats contractants désignés:
**AT BE CH DE ES FR GB GR IT LI LU NL PT SE**

(30) Priorité: **30.06.1998 BE 9800493**

(43) Date de publication de la demande:
**09.05.2001 Bulletin 2001/19**

(73) Titulaire: **GLAVERBEL**
**1170 Bruxelles (BE)**

(72) Inventeur: **FOGUENNE, Marc**
**B-5081 Saint-Denis (BE)**

(74) Mandataire: **Baruh, Colette**
**Glaverbel**
**Centre de R. & D.,**
**Direction de la Propriété Industrielle,**
**Rue de l'Aurore, 2**
**6040 Jumet (BE)**

(56) Documents cités:
EP-A- 0 644 164    EP-A- 0 803 479
EP-A- 0 887 320    FR-A- 2 738 240
GB-A- 2 315 487    US-A- 5 688 727

**Description**

La présente invention concerne un verre sodo-calcique coloré vert composé de constituants principaux, formateurs de verre et d'agents colorants.

L'expression "verre sodo-calcique" est utilisée ici dans le sens large et concerne tour verre qui contient les constituants suivants (pourcentages en poids):

| | |
|---|---|
| $Na_2O$ | 10 à 20 % |
| CaO | 0 à 16 % |
| $SiO_2$ | 60 à 75 % |
| $K_2O$ | 0 à 10 % |
| MgO | 0 à 10 % |
| $Al_2O_3$ | 0 à 5 % |
| BaO | 0 à 2 % |
| BaO + CaO + MgO | 10 à 20 % |
| $K_2O$ + $Na_2O$ | 10 à 20 % |

Ce type de verre trouve un très large usage dans le domaine des vitrages pour le bâtiment ou l'automobile, par exemple. On le fabrique couramment sous forme de ruban par le procédé d'étirage ou de flottage. Un tel ruban peut être découpé sous forme de feuilles qui peuvent ensuite être bombées ou subir un traitement de renforcement des propriétés mécaniques, par exemple une trempe thermique.

Lorsqu'on parle des propriétés optiques d'une feuille de verre, il est en général nécessaire de rapporter ces propriétés à un illuminant standard. Dans la présente description, on utilise 2 illuminants standards. L'illuminant C et l'illuminant A définis par la Commission Internationale de l'Eclairage (C.I.E.). L'illuminant C représente la lumière du jour moyenne ayant une température de couleur de 6700 K. Cet illuminant est surtout utile pour évaluer les propriétés optiques des vitrages destinés au bâtiment. L'illuminant A représente le rayonnement d'un radiateur de Planck à une température d'environ 2856 K. Cet illuminant figure la lumière émise par des phares de voiture et est essentiellement destiné à évaluer les propriétés optiques des vitrages destinés à l'automobile. La Commission internationale de l'Eclairage a également publié un document intitulé "Colorimétrie. Recommandations Officielles de la C.I.E." (mai 1970) qui décrit une théorie selon laquelle les coordonnées colorimétriques pour la lumière de chaque longueur d'onde du spectre visible sont définies de manière à pouvoir être représentées sur un diagramme ayant des axes orthogonaux x et y, appelé diagramme trichromatique C.I.E. Ce diagramme trichromatique montre le lieu représentatif de la lumière de chaque longueur d'onde (exprimée en nanomètres) du spectre visible. Ce lieu est appelé "spectrum locus" et la lumière dont les coordonnées se placent sur ce spectrum locus est dite posséder 100 % de pureté d'excitation pour la longueur d'onde appropriée. Le spectrum locus est fermé par une ligne appelée ligne des pourpres qui joint les points du spectrum locus dont les coordonnées correspondent aux longueurs d'onde 380 nm (violet) et 780 nm (rouge). La surface comprise entre le spectrum locus et la ligne des pourpres est celle disponible pour les coordonnées trichromatiques de toute lumière visible. Les coordonnées de la lumière émise par l'illuminant C par exemple, correspondent à x = 0,3101 et y = 0,3162. Ce point C est considéré comme représentant de la lumière blanche et de ce fait a une pureté d'excitation égale à zéro pour toute longueur d'onde. Des lignes peuvent être tirées depuis le point C vers le spectrum locus à toute longueur d'onde désirée et tout point situé sur ces lignes peut être défini non seulement par ses coordonnées x et y, mais aussi en fonction de la longueur d'onde correspondant à la ligne sur laquelle il se trouve et de sa distance depuis le point C rapportée à la longueur totale de la ligne de longueur d'onde. Dès lors, la teinte de la lumière transmise par une feuille de verre coloré peut être décrite par sa longueur d'onde dominante et sa pureté d'excitation exprimée en pour-cent.

En fait, les coordonnées C.I.E. de lumière transmise par une feuille de verre coloré dépendront non seulement de la composition du verre mais aussi de son épaisseur. Dans la présente description, ainsi que dans les revendications. toutes les valeurs de la pureté d'excitation P, de la longueur d'onde dominante $\lambda_D$ de la lumière transmise, et du facteur de transmission lumineuse du verre (TLC5) sont calculées à partir des transmissions spécifiques internes spectrales ($TSI_\lambda$) d'une feuille de verre de 5 mm d'épaisseur. La transmission spécifique interne spectrale d'une feuille de verre est régie uniquement par l'absorption du verre et peut être exprimée par la loi de Beer-Lambert:

$TSI_\lambda = e^{-E.A\lambda}$ où $A_\lambda$ est le coefficient d'absorption du verre (en $cm^{-1}$) à la longueur d'onde considérée et E l'épaisseur du verre (en cm). En première approximation. $TSI_\lambda$ peut également être représenté par la formule

$$(I_3 + R_2) / (I_1 - R_1)$$

où $I_1$ est l'intensité de la lumière visible incidente à une première face de la feuille de verre, $R_1$ est l'intensité de la lumière visible réfléchie par cette face, $I_3$ est l'intensité de la lumière visible transmise à partir de la seconde face de la feuille de verre et $R_2$ est l'intensité de la lumière visible réfléchie vers l'intérieur de la feuille par cette seconde face.

Dans la description qui suit ainsi que dans les revendications, on utilise encore:

- la transmission lumineuse totale pour l'illuminant A (TLA), mesurée pour une épaisseur de 4 mm (TLA4). Cette transmission totale est le résultat de l'intégration entre les longueurs d'onde de 380 et 780 nm de l'expression: $\sum T_\lambda.E_\lambda.S_\lambda / \sum E_\lambda.S_\lambda$ dans laquelle $T_\lambda$ est la transmission à la longueur d'onde $\lambda$, $E_\lambda$ est la distribution spectrale de l'illuminant A et $S_\lambda$ est la sensibilité de l'oeil humain normal en fonction de la longueur d'onde $\lambda$.
- la transmission énergétique totale (TE), mesurée pour une épaisseur de 4 mm . (TE4). Cette transmission totale est le résultat de l'intégration entre les longueurs d'onde 300 et 2150 nm de l'expression: $\sum T_\lambda.E_\lambda / \sum E_\lambda$ dans laquelle $E_\lambda$ est la distribution énergétique spectrale du soleil à 30° au dessus de l'horizon.
- la sélectivité (SE). mesurée par le rapport de la transmission lumineuse totale pour l'illuminant A et de la transmission énergétique totale (TLA/TE).
- la transmission totale dans l'ultraviolet, mesurée pour une épaisseur de 4 mm (TUV4). Cette transmission totale est le résultat de l'intégration entre 280 et 380 nm de l'expression: $\sum T_\lambda.U_\lambda / \sum U_\lambda$. dans laquelle $U_\lambda$ est la distribution spectrale du rayonnement ultraviolet ayant traversé l'atmosphère, déterminée dans la norme DIN 67507.

La présente invention concerne en particulier des verres verts. Les verres verts sont généralement choisis pour leurs propriétés protectrices vis à vis du rayonnement solaire et leur emploi dans le bâtiment est connu. Les verres verts sont utilisés en architecture ainsi que pour vitrer partiellement certains véhicules ou compartiments de chemin de fer.

La présente invention concerne un verre vert hautement sélectif spécialement approprié à une utilisation sous forme de vitrages de voiture et en particulier comme vitrages latéraux avant et arrière et lunette arrière. Il est en effet important dans le domaine automobile que les vitrages de véhicules offrent une transmission lumineuse suffisante tout en présentant une transmission énergétique la plus faible possible afin d'éviter toute surchauffer de l'habitacle par temps ensoleillé.

Les verres à haute sélectivité imposent généralement une forte absorption du rayonnement infrarouge ce qui les rend difficiles à fabriquer dans les fours de verreries traditionnels.

L'invention fournit un verre coloré vert sodo-calcique composé de constituants principaux formateurs de verre et d'agents colorants, tel que défini à la revendication 1.

La combinaison de ces propriétés optiques est particulièrement avantageuse en ce qu'elle offre, tout en assurant une bonne transmission de la lumière a travers le verre, une haute valeur de sélectivité et une faible valeur de transmission dans l'ultraviolet. Ceci permet à la fois d'éviter l'échauffement intérieur des volumes délimités par des vitrages selon l'invention ainsi que la décoloration inesthétique des objets placés à l'intérieur de ces volumes, sous l'effet du rayonnement solaire ultraviolet.

De préférence, le verre selon l'invention possède une sélectivité (SE4) supérieure ou égale à 1.55, plus préférablement encore supérieure à 1.6. De telles valeurs de sélectivité permettent d'optimiser l'efficacité de filtration thermique d'un vitrage pour une transmission lumineuse donnée et dès lors d'améliorer le confort des espaces vitrés en limitant leur surchauffe lors d'un fort ensoleillement.

Il est remarquable d'obtenir ce résultat alors que le verre présente une faible limite supérieure de la teneur en poids en FeO. Cette valeur de la teneur en FeO signifie que le verre peut être réalisé au moyen d'un four traditionnel, pouvant être de grande capacité. L'utilisation d'un tel four est économique comparativement à celle de petits fours électriques auxquels il doit être habituellement recouru dans la fabrication de verres hautement sélectifs. Dans de tels cas en effet, les teneurs élevées en FeO le rendent difficile à fondre, nécessitant parfois l'utilisation de fours électriques de faibles capacités.

Le fer est en fait présent dans la plupart des verres existant sur le marché, soit en tant qu'impureté, soit introduit délibérément en tant qu'agent colorant. La présence de $Fe^{3+}$ confère au verre une légère absorption de la lumière visible de faible longueur d'onde (410 et 440 nm) et une très forte bande d'absorption dans ultraviolet (bande d'absorption centrée sur 380 nm), tandis que la présence d'ions $Fe^{2+}$ provoque une forte absorption dans l'infrarouge (bande d'absorption centrée sur 1050 nm). Les ions ferriques donnent au verre une légère coloration jaune, tandis que les ions ferreux donnent une coloration bleu-vert plus prononcée. Toutes autres considérations restant égales, ce sont les ions $Fe^{2+}$ qui sont responsables de l'absorption dans le domaine infrarouge et qui conditionnent donc TE. La valeur de TE diminue, ce qui fait augmenter celle de SE, lorsque la concentration en $Fe^{2+}$ augmente. En favorisant la présence d'ions $Fe^{2+}$ vis à vis des ions $Fe^{3+}$, l'on obtient donc une sélectivité élevée.

De préférence, le verre selon l'invention offre une TL supérieure à 50 %, plus préférablement encore supérieure à 55 %. De la sorte, le verre assure une transmission lumineuse satisfaisant largement aux limites inférieures recommandées pour des raisons de sécurité à l'arrière des véhicules.

Avantageusement, la longueur d'onde dominante du verre selon l'invention est inférieure à 550 nm, de préférence à 520 nm. Des verres verts d'une nuance respectant ces limites supérieures sont considérés comme esthétiques.

De préférence, un verre coloré selon l'invention ne comprend pas plus de trois agents colorants. Ceci est avantageux en termes de facilité de contrôle des propriétés du mélange des composants à fondre pour réaliser le verre par rapport à des compositions comprenant un plus grand nombre d'agents colorants dont l'homogénéité est plus difficile à maintenir.

Le verre selon l'invention comprend en tant qu'agent colorant en plus du fer et du cobalt, l'un au moins des éléments chrome, et vanadium. L'ajout de quantités très faibles de ces éléments permet d'ajuster les propriétés optiques du verre de façon optimale et spécialement d'obtenir un verre hautement sélectif.

On peut produire du verre ayant à peu près une coloration similaire à celle du verre selon l'invention en utilisant notamment du nickel comme agent colorant. La présence de nickel présente cependant des inconvénients, spécialement lorsque le verre doit être produit par le procédé de flottage. Dans le procédé de flottage, un ruban de verre chaud est acheminé le long de la surface d'un bain d'étain fondu de sorte que ses faces soient planes et parallèles. Afin d'éviter l'oxydation de l'étain à la surface du bain, ce qui conduirait à l'entraînement d'oxyde d'étain par le ruban, on maintient une atmosphère réductrice au-dessus du bain. Lorsque le verre contient du nickel, celui-ci est partiellement réduit par l'atmosphère surmontant le bain d'étain donnant naissance à un voile dans le verre produit. Cet élément est également peu propice à l'obtention d'une valeur élevée de la sélectivité du verre qui le contient car il n'absorbe pas la lumière dans le domaine de l'infra-rouge ce qui conduit à une valeur de TE importante. De plus, le nickel présent dans le verre peut former du sulfure NiS. Ce sulfure existe sous diverses formes cristallines, stables dans des domaines de températures différents, et dont les transformations l'une en l'autre créent des problèmes lorsque le verre doit être renforcé par un traitement de trempe thermique, comme c'est le cas dans le domaine de l'automobile et aussi

pour certains vitrages du bâtiment (balcons, allèges, ... ). Le verre conforme à l'invention qui ne contient pas de nickel est donc particulièrement bien adapté à la fabrication par le procédé de flottage ainsi qu'à un usage architectural ou dans le domaine des véhicules automobiles ou autres.

Les effets des différents agents colorants envisagés individuellement, pour l'élaboration d'un verre sont les suivants (selon "Le Verre" de H. Scholze - traduit par J. Le Dû - Institut du Verre - Paris):

Cobalt: Le groupe $Co^{II}O_4$ produit une coloration bleu intense.

Chrome: La présence du groupe $Cr^{III}O_6$ donne naissance à des bandes d'absorption à 650 nm et donne une couleur vert clair. Une oxydation plus poussée donne naissance au groupe $Cr^{VI}O_4$ qui provoque une bande d'absorption très intense à 365 nm et donne une coloration jaune.

Vanadium: Pour des teneurs croissantes en oxydes alcalins, la couleur vire du vert à l'incolore, ce qui est provoqué par l'oxydation du groupe $V^{III}O_6$ en $V^vO_4$.

Les propriétés énergétiques et optiques d'un verre contenant plusieurs agents colorants résultent donc d'une interaction complexe entre ceux-ci. En effet, ces agents colorants ont un comportement qui dépend fortement de leur état rédox et donc de la présence d'autres éléments susceptibles d'influencer cet état.

Dans des formes préférées, le verre selon l'invention présente des propriétés optiques qui se situent dans les gammes définies ci-dessous:

$$55\ \% < TLA4 < 70\ \%$$

$$30\ \% < TE4 < 45\ \%$$

$$6\ \% < TUV4 < 20\ \%$$

$$490\ nm < \lambda_D < 520\ nm$$

$$2\ \% < P < 10\ \%$$

La gamme de transmission lumineuse ainsi définie rend le verre selon l'invention particulièrement utile pour atténuer l'éblouissement par la lumière des phares d'automobiles lorsqu'il est utilisé pour des vitrages latéraux arrière ou comme lunette arrière de véhicules. La gamme de transmission énergétique correspondante assure au verre sa haute sélectivité. Sous forme de vitrages latéraux avant de véhicules, le verre selon l'invention doit présenter une TL supérieure ou égale à 70 %. Il est dès lors utilisé dans une épaisseur de 3 mm, de manière à satisfaire cette exigence. Quant aux gammes de longueurs d'onde dominantes et de pureté d'excitation, elles correspondent à des nuances et une intensité de couleur particulièrement appréciées, spécialement selon les canons en vigueur en la matière actuellement dans les domaines architecturaux et automobiles.

Ces propriétés sont obtenues à partir des pourcentages en poids en agents colorants suivants, la quantité totale de fer étant exprimée sous forme de $Fe_2O_3$:

| $Fe_2O_3$ | 0.7 à 1.3 % |
|---|---|
| FeO | 0. 18 à 0.27 % |
| Co | 0 à 0.0040 % |
| $V_2O_5$ | 0.0050 à 0.1 % |

L'utilisation du vanadium en tant qu'agent colorant offre l'avantage de limiter les coûts de production du verre selon l'invention de par le caractère peu onéreux de cet élément. D'autre part, le vanadium est également bénéfique à la protection de l'environnement par son caractère peu polluant et à l'obtention de la faible valeur de transmission du rayonnement ultraviolet du verre selon l'invention. Le vanadium présente également une forte absorption dans le domaine du rayonnement infrarouge, ce qui est propice à l'obtention d'un verre présentant une faible transmission énergétique et une haute sélectivité.

Il est également possible d'obtenir les mêmes gammes de propriétés optiques à partir de la présence dans le verre des pourcentages en poids en agents colorants suivants:

| $Fe_2O_3$ | 0.7 à 1.3 % (fer total) |
|---|---|
| FeO | 0.18 à 0.27 % |
| Co | 0 à 0,0040 % |
| $Cr_2O_3$ | 0.0015 à 0.0250 % |

La combinaison de ces agents colorants et en particulier l'utilisation de chrome n'est pas défavorable à la préservation des .parois réfractaires du four de fabrication du verre vis à vis desquelles ils ne présentent pas de risques de corrosion.

Selon des formes spécialement préférées, le verre selon l'invention présente des propriétés optiques situées dans les gammes suivantes:

$$63 \% < TLA4 < 67\%$$

$$37 \% < TE4 < 41 \%$$

$$11 \% < TUV4 < 18 \%$$

$$500 \text{ nm} < \lambda_D < 505 \text{ nm}$$

$$4\% < P < 6\%$$

Le verre présentant des propriétés optiques comprises dans les gammes plus restreintes définies ci-dessus est particulièrement performant puisqu'il réunit des propriétés de transmission énergétique et lumineuse optimales pour être utilisé comme vitrages latéraux arrière et lunette arrière de véhicule. Dans une épaisseur de 3 mm, il est également utilisable sous forme de vitrage latéral avant de véhicule. Dans son utilisation architecturale, il combine ses qualités esthétiques à une importante économie d'énergie liée à une moindre sollicitation des systèmes de conditionnement d'air.

De telles propriétés sont obtenues à partir des pourcentages en poids en agents colorants suivants, la quantité totale de fer étant exprimée sous forme de $Fe_2O_3$:

| | |
|---|---|
| $Fe_2O_3$ | 0.88 à 0.98 % |
| FeO | 0.22 à 0.25 % |
| Co | 0,0003 à 0,0009 % |
| $V_2O_5$ | 0,0200 à 0,0400 % |

Il est également possible d'obtenir les mêmes gammes de propriétés optiques à partir de la présence dans le verre des pourcentages en poids en agents colorants suivants:

| | |
|---|---|
| $Fe_2O_3$ | 0.88 à 0.98 % |
| FeO | 0.22 à 0.25 % |
| Co | 0.0003 à 0.0011 % |
| $Cr_2O_3$ | 0.0020 à 0.0100 % |

De préférence, le verre selon l'invention présente un pourcentage en poids de FeO inférieur à 0.25. Ceci le rend particulièrement aisé à fondre dans un four traditionnel de verrerie, par rapport à des verres qui présentent des teneurs en FeO sensiblement plus élevées.

Le verre selon l'invention est utilisé de préférence sous forme de feuilles ayant une épaisseur de 3 ou 4 mm pour les vitres latérales arrière et la lunette arrière de véhicules et des épaisseurs de plus de 4 mm dans le bâtiment.

Le verre selon l'invention possède également de préférence. une transmission lumineuse totale sous illuminant C pour une épaisseur de 5 mm (TLC5) comprise entre 50 et 70 %, ce qui le rend propice à supprimer l'éblouissement par la lumière du soleil lorsqu'il est utilisé dans le bâtiment.

Le verre selon l'invention peut être revêtu d'une couche d'oxydes métalliques réduisant son échauffement par le rayonnement solaire et par conséquent celui de l'habitacle d'un véhicule utilisant un tel verre comme vitrage.

Les verres selon la présente invention peuvent être fabriqués par des procédés traditionnels. En tant que matières premières, on peut utiliser des matières naturelles, du verre recyclé, des scories ou une combinaison de ces matières. Les colorants ne sont pas nécessairement ajoutés dans la forme indiquée, mais cette manière de donner les quantités d'agents colorants ajoutées, en équivalents dans les formes indiquées, répond à la pratique courante. En pratique, le fer est ajouté sous forme de potée, le cobalt est ajouté sous forme de sulfate hydraté. tel que $CoSO_4$. $7H_2O$ ou $CoSO_4.6H_2O$, le chrome est ajouté sous forme de bichromate tel que $K_2Cr_2O_7$. Quant au vanadium, on l'introduit sous forme d'oxyde ou de vanadate de sodium.

D'autres éléments sont parfois présents en tant qu'impuretés dans les matières premières utilisées pour fabriquer le verre selon l'invention (par exemple de l'oxyde de manganèse dans des proportions de l'ordre de 100 à 300 ppm), que ce soit dans les matières naturelles, dans le verre recyclé ou dans les scories, mais lorsque la présence de ces impuretés ne confère pas au verre des propriétés hors des limites définies ci-dessus, ces verres sont considérés comme conformes à la présente invention.

La présente invention sera illustrée par les exemples spécifiques de propriétés optiques et de compositions qui suivent.

**EXEMPLES 1 à 74**

Le tableau I donne à titre indicatif la composition de base du verre ainsi que les constituants de la charge vitrifiable à fondre pour produire les verres selon l'invention. Le mélange vitrifiable peut, si nécessaire, contenir un agent réducteur tel que du coke, du graphite ou du laitier ou un agent oxydant tel que du nitrate. Dans ce cas, les proportions des autres matériaux sont adaptées afin que la composition du verre demeure inchangée.

Les tableaux IIa et IIb donnent les propriétés optiques et les proportions en poids des agents colorants d'un verre comprenant respectivement soit le vanadium soit le chrome parmi ses agents colorants. Ces proportions sont déterminées par fluorescence X du verre et converties en l'espèce moléculaire indiquée.

TABLEAU I

| Analyse du verre de base | | Constituants du verre de base | |
|---|---|---|---|
| $SiO_2$ | 71.5 à 71.9 % | Sable | 571.3 |
| $Al_2O_3$ | 0.8 % | Feldspath | 29.6 |
| CaO | 8.8 % | Chaux | 35.7 |
| MgO | 4.2 % | Dolomie | 167.7 |
| $Na_2O$ | 14.1% | $Na_2CO_3$ | 188.6 |
| $K_2O$ | 0.1 % | Sulfate | 6.1 |
| $SO_3$ | 0.1 à 0.5 % | | |

## TABLEAU IIa

| Exemple | 1 | 2 | 3 | 4 | 5 | 6 | 7 | 8 | 9 | 10 |
|---|---|---|---|---|---|---|---|---|---|---|
| $Fe_2O_3$ (%) | 0.79 | 0.80 | 0,78 | 0.86 | 0.87 | 0.87 | 0.93 | 0.93 | 0.94 | 0.79 |
| FeO (%) | 0.20 | 0.19 | 0.19 | 0.23 | 0.21 | 0.22 | 0.24 | 0.23 | 0.23 | 0.22 |
| Co (ppm) | 9 | 9 | 12 | 16 | 13 | 15 | 15 | 13 | 12 | 4 |
| $V_2O_5$ (ppm) | 169 | 322 | 348 | 124 | 277 | 473 | 121 | 283 | 382 | 81 |
| TLA4 (%) | 68.20 | 67.75 | 67.32 | 63.87 | 64.25 | 63.35 | 62.46 | 62.60 | 61.99 | 69.18 |
| TE4 (%) | 44.30 | 44.80 | 44.20 | 40.2 | 41.4 | 40.6 | 38.7 | 39.4 | 39 | 42.9 |
| $\lambda_D$ * (nm) | 494.0 | 496.4 | 497.3 | 492.1 | 495.0 | 495.0 | 493.1 | 496.2 | 496.8 | 495.4 |
| P * (%) | 6.49 | 5.64 | 5.55 | 8.41 | 6.82 | 7.05 | 8.18 | 6.68 | 6.64 | 6.2 |
| TUV4 (%) | 17.90 | 15.80 | 15.20 | 16.1 | 13.9 | 13.5 | 14.1 | 12.3 | 11.8 | 18.8 |
| SE | 1.5 | 1.5 | 1.5 | 1.6 | 1.6 | 1.6 | 1.6 | 1.6 | 1.6 | 1.6 |

| Exemple | 11 | 12 | 13 | 14 | 15 | 16 | 17 | 18 | 19 | 20 |
|---|---|---|---|---|---|---|---|---|---|---|
| $Fe_2O_3$ (%) | 0.80 | 0.80 | 0.79 | 0.79 | 0.80 | 0.94 | 0.97 | 0.97 | 0.85 | 0.84 |
| FeO (%) | 0.20 | 0.20 | 0.22 | 0.20 | 0.20 | 0.24 | 0.24 | 0.24 | 0.20 | 0.21 |
| Co (ppm) | 4 | 4 | 15 | 15 | 12 | 4 | 4 | 4 | 4 | 4 |
| $V_2O_5$ (ppm) | 279 | 377 | 105 | 365 | 360 | 76 | 268 | 401 | 106 | 333 |
| TLA4 (%) | 68.94 | 68.49 | 65.14 | 64.96 | 65.23 | 65.72 | 65.00 | 64.12 | 68.80 | 67.43 |
| TE4 (%) | 43.9 | 43.6 | 41.7 | 42.5 | 43.1 | 39.7 | 39.5 | 38.8 | 43.8 | 42.8 |
| $\lambda_D$ * (nm) | 499.5 | 500.6 | 491.4 | 492.9 | 494.6 | 498.2 | 502.9 | 503.5 | 498.3 | 499.4 |
| P * (%) | 4.92 | 4.8 | 8.54 | 7.64 | 6.7 | 5.83 | 4.91 | 4.93 | 5.08 | 5.12 |
| TUV4 (%) | 16.2 | 15.6 | 18.1 | 16.4 | 15 | 13.9 | 11.8 | 11.1 | 16 | 14.6 |
| SE | 1.6 | 1.6 | 1.6 | 1.5 | 1.5 | 1.7 | 1.6 | 1.7 | 1.6 | 1.6 |

| Exemple | 21 | 22 | 23 | 24 | 25 | 26 | 27 | 28 | 29 | 30 |
|---|---|---|---|---|---|---|---|---|---|---|
| $Fe_2O_3$ (%) | 0.84 | 0.85 | 0.85 | 0.85 | 0.84 | 0.85 | 0.86 | 0.86 | 0.88 | 0.86 |
| FeO (%) | 0.19 | 0.21 | 0.19 | 0.21 | 0.22 | 0.21 | 0.22 | 0.21 | 0.20 | 0.22 |
| Co (ppm) | 4 | 8 | 8 | 9 | 5 | 4 | 4 | 21 | 42 | 23 |
| $V_2O_5$ (ppm) | 510 | 92 | 390 | 532 | 89 | 290 | 439 | 188 | 183 | 270 |
| TLA4 (%) | 68.22 | 67.19 | 67.20 | 65.85 | 67.81 | 67.71 | 66.61 | 62.72 | 57.44 | 62.25 |
| TE4 (%) | 44.1 | 42.5 | 43.9 | 41.9 | 41.6 | 42.8 | 41.7 | 40.8 | 39.5 | 40.2 |
| $\lambda_D$ * (nm) | 504.4 | 496.0 | 500.9 | 499.3 | 496.8 | 501.6 | 502.5 | 492.9 | 488.5 | 493.0 |
| P * (%) | 4.11 | 6.05 | 4.56 | 5.35 | 5.93 | 4.65 | 4.73 | 7.93 | 11.62 | 8.15 |
| TUV4 (%) | 13.4 | 15.9 | 13.6 | 13.5 | 16.4 | 14 | 13.1 | 14.2 | 13.4 | 13.9 |
| SE | 1.5 | 1.6 | 1.5 | 1.6 | 1.6 | 1.6 | 1.6 | 1.5 | 1.5 | 1.5 |

| Exemple | 31 | 32 | 33 | 34 | 35 | 36 | 37 | 38 | 39 | 40 |
|---|---|---|---|---|---|---|---|---|---|---|
| $Fe_2O_3$ (%) | 0.89 | 0.88 | 0.87 | 0.83 | 0.85 | 0.83 | 0.84 | 0.85 | 0.85 | 0.83 |
| FeO (%) | 0.21 | 0.21 | 0.21 | 0.20 | 0.20 | 0.20 | 0.21 | 0.20 | 0.20 | 0.22 |
| Co (ppm) | 2 | 4 | 7 | 2 | 3 | 4 | 2 | 4 | 5 | 12 |
| $V_2O_5$ (ppm) | 94 | 162 | 385 | 276 | 274 | 264 | 471 | 421 | 445 | 92 |
| TLA4 (%) | 68.47 | 67.31 | 65.49 | 69.02 | 68.35 | 67.96 | 67.92 | 68.23 | 67.20 | 65.78 |
| TE4 (%) | 42.50 | 41.90 | 41.30 | 43.80 | 43.60 | 43.60 | 42.50 | 43.80 | 42.90 | 41.30 |
| $\lambda_D$ * (nm) | 500.4 | 500.7 | 501.3 | 504.4 | 502.5 | 500.6 | 502.1 | 503.8 | 500.5 | 493.3 |
| P * (%) | 4.80 | 4.90 | 5.04 | 4.05 | 4.35 | 4.72 | 4.65 | 4.21 | 4.90 | 7.50 |
| TUV4 (%) | 15.00 | 14.00 | 12.60 | 14.10 | 14.00 | 14.30 | 14.4 | 13.60 | 14.00 | 16.70 |
| SE | 1.61 | 1.61 | 1.59 | 1.58 | 1.57 | 1.56 | 1.60 | 1.56 | 1.57 | 1.59 |

| Exemple | 41 | 42 | 43 | 44 | 45 | 46 | 47 | 48 | 49 | 50 |
|---|---|---|---|---|---|---|---|---|---|---|
| $Fe_2O_3$ (%) | 0.84 | 0.84 | 0.83 | 0.83 | 0.86 | 0.86 | 0.86 | 0.85 | 0.86 | 0.86 |
| FeO (%) | 0.22 | 0.21 | 0.20 | 0.21 | 0.21 | 0.21 | 0.23 | 0.22 | 0.21 | 0.20 |
| Co (ppm) | 12 | 12 | 21 | 22 | 14 | 14 | 11 | 87 | 16 | 13 |
| $V_2O_5$ (ppm) | 208 | 401 | 401 | 358 | 209 | 184 | 200 | 195 | 161 | 158 |
| TLA4 (%) | 65.39 | 64.63 | 63.26 | 62.30 | 65.00 | 65.27 | 64.86 | 47.74 | 64.33 | 65.91 |
| TE4 (%) | 41.30 | 41.50 | 41.50 | 40.70 | 41.40 | 41.90 | 40.50 | 35.00 | 41.30 | 42.60 |
| $\lambda_D$ * (nm) | 494.3 | 496.1 | 492.7 | 493.0 | 495.5 | 495.4 | 495.0 | 483.5 | 494.4 | 496.5 |
| P * (%) | 7.09 | 6.44 | 7.95 | 8.07 | 6.52 | 6.47 | 6.92 | 20.89 | 7.01 | 5.88 |
| TUV4 (%) | 15.70 | 13.90 | 14.70 | 13.90 | 14.70 | 14.90 | 15.10 | 14.50 | 14.70 | 14.40 |
| SE | 1.58 | 1.56 | 1.52 | 1.53 | 1.57 | 1.56 | 1.60 | 1.36 | 1.56 | 1.55 |

9

| Exemple | 51 | 52 | 53 | 54 | 55 | 56 | 57 | 58 | 59 | 60 |
|---|---|---|---|---|---|---|---|---|---|---|
| $Fe_2O_3$ (%) | 0.87 | 0.87 | 0.85 | 0.96 | 0.87 | 0.88 | 0.86 | 0.86 | 0.84 | 0.85 |
| FeO (%) | 0.21 | 0.23 | 0.21 | 0.22 | 0.22 | 0.22 | 0.21 | 0.21 | 0.23 | 0.22 |
| Co (ppm) | 13 | 13 | 16 | 12 | 10 | 12 | 11 | 16 | 12 | 12 |
| $V_2O_5$ (ppm) | 158 | 163 | 279 | 195 | 180 | 229 | 200 | 204 | 195 | 278 |
| TLA4 (%) | 65.36 | 64.08 | 64.99 | 65.05 | 65.01 | 64.42 | 65.79 | 64.18 | 64.68 | 64.52 |
| TE4 (%) | 41.70 | 39.70 | 41.70 | 41.20 | 41.20 | 40.60 | 42.00 | 41.10 | 40.40 | 40.50 |
| $\lambda_D$ * (nm) | 495.9 | 494.2 | 495.0 | 494.7 | 495.7 | 495.8 | 496.1 | 494.1 | 493.7 | 494.5 |
| P * (%) | 6.28 | 7.43 | 6.68 | 6.90 | 6.49 | 6.58 | 6.16 | 7.22 | 7.55 | 7.12 |
| TUV4 (%) | 14.60 | 15.00 | 14.80 | 15.20 | 14.50 | 14.00 | 14.70 | 14.60 | 15.80 | 14.90 |
| SE | 1.57 | 1.61 | 1.56 | 1.58 | 1.58 | 1.59 | 1.57 | 1.56 | 1.60 | 1.59 |

## TABLEAU IIb

| Exemple | 61 | 62 | 63 | 64 | 65 | 66 | 67 |
|---|---|---|---|---|---|---|---|
| $Fe_2O_3$ (%) | 0.93 | 0.93 | 1.02 | 1.02 | 0.84 | 0.84 | 0,93 |
| FeO (%) | 0.23 | 0.23 | 0.25 | 0.25 | 0.21 | 0.22 | 0,23 |
| Co (ppm) | 14 | 15 | 15 | 15 | 15 | 15 | 14 |
| $Cr_2O_3$ (ppm) | 22 | 51 | 29 | 56 | 27 | 54 | 22 |
| TLA4 (%) | 63.77 | 63.23 | 61.58 | 61.20 | 66.04 | 65.22 | 63,77 |
| TE4 (%) | 39.40 | 39.05 | 37.00 | 36.86 | 42.27 | 41.31 | 39,40 |
| $\lambda_D$ * (nm) | 494.1 | 495.5 | 495.8 | 497.1 | 493.4 | 494.1 | 494,1 |
| P * (%) | 7.49 | 7.20 | 7.31 | 6.96 | 7.26 | 7.41 | 7,49 |
| TUV4 (%) | 15.25 | 14.94 | 12.64 | 12.46 | 17.52 | 17.73 | 15,25 |
| SE | 1.62 | 1.62 | 1.66 | 1.66 | 1.56 | 1.58 | 1,62 |

| Exemple | 68 | 69 | 70 | 71 | 72 | 73 | 74 |
|---|---|---|---|---|---|---|---|
| $Fe_2O_3$ (%) | 0.93 | 1.02 | 1.02 | 0.84 | 0.84 | 0.93 | 0.94 |
| FeO (%) | 0.23 | 0.25 | 0.25 | 0.21 | 0.21 | 0.23 | 0.22 |
| Co (ppm) | 15 | 15 | 15 | 15 | 15 | 46 | 45 |
| $Cr_2O_3$ (ppm) | 51 | 29 | 56 | 27 | 54 | 38 | 62 |
| TLA4 (%) | 63.23 | 61.58 | 61.20 | 66.04 | 65.22 | 55.71 | 55.97 |
| TE4 (%) | 39.05 | 37.00 | 36.86 | 42.27 | 41.31 | 36.51 | 37.13 |
| $\lambda_D$ * (nm) | 495.5 | 495.8 | 497.1 | 493.4 | 494.1 | 487.9 | 488.8 |
| P * (%) | 7.20 | 7.31 | 6.96 | 7.26 | 7.41 | 13.42 | 12.46 |
| TUV4 (%) | 14.94 | 12.64 | 12.46 | 17.52 | 17.73 | 14.85 | 14.33 |
| SE | 1.62 | 1.66 | 1.66 | 1.56 | 1.58 | 1.53 | 1.51 |

## Revendications

**1.** Verre sodo-calcique coloré vert composé de constituants principaux formateurs de verre et d'agents colorants, **caractérisé en ce qu'**il comprend les pourcentages en poids en agents colorants suivants :

| | |
|---|---|
| $Fe_2O_3$ | 0.7 à 1.3% |
| FeO | 0.18 à 0.27% |
| Co | 0 à 0.0040% |

et du vanadium ou du chrome dans les pourcentages en poids suivants :

| | |
|---|---|
| $V_2O_5$ | 0.0050 à 0.1000% |
| $Cr_2O_3$ | 0.0015 à 0.0250% |

et présente sous illuminant A et pour une épaisseur de verre de 4 mm, une transmission lumineuse (TLA4) comprise entre 40 et 70 %, une sélectivité (SE4) supérieure ou égale à 1.50 et une transmission du rayonnement ultraviolet (TUV4) inférieure à 20%.

2.  Verre coloré selon l'une quelconque des revendications précédentes, **caractérisé en ce qu'**il présente une sélectivité (SE4) supérieure ou égale à 1.55, de préférence supérieure à 1.60.

3.  Verre coloré selon l'une quelconque des revendications précédentes, **caractérisé en ce qu'**il présente une transmission lumineuse supérieure à 50 %, de préférence supérieure à 55 %.

4.  Verre coloré selon l'une quelconque des revendications précédentes, **caractérisé en ce qu'**il présente une longueur d'onde dominante ($\lambda_D$) inférieure à 550 nm, de préférence inférieure à 520 nm calculée à partir de la transmission spécifique interne spectrale d'un verre ayant une épaisseur de 5 mm.

5.  Verre coloré selon l'une quelconque des revendications précédentes **caractérisé en ce qu'**il ne comprend pas plus de trois agents colorants.

6.  Verre coloré selon l'une quelconque des revendications précédentes, **caractérisé en ce qu'**il présente les propriétés optiques suivantes:

$$55 \% < TLA4 < 70 \%$$

$$30 \% < TE4 < 45 \%$$

$$6 \% < TUV4 < 20 \%$$

$$490 \text{ nm} < \lambda_D < 520 \text{ nm}$$

$$2 \% < P < 10 \%$$

7.  Verre coloré selon l'une quelconque des revendications précédentes **caractérisé en ce qu'**il présente les propriétés optiques suivantes:

$$63 \% < TLA4 < 67\%$$

$$37 \% < TE4 < 41 \%$$

$$11 \% < TUV4 < 18 \%$$

$$500 \text{ nm} < \lambda_D < 505 \text{ nm}$$

$$4 \% < P < 6 \%$$

8.  Verre coloré selon la revendication 7, **caractérisé en ce qu'**il comprend les pourcentages en poids en agents colorants suivants, la quantité totale de fer étant exprimée sous forme de $Fe_2O_3$:

| | |
|---|---|
| $Fe_2O_3$ | 0.88 à 0.98 % |

(suite)

| | |
|---|---|
| FeO | 0.22 à 0.25 % |
| Co | 0.0003 à 0.0009 % |
| $V_2O_5$ | 0.0200 à 0.0400.% |

**9.** Verre coloré selon la revendication 7, **caractérisé en ce qu'**il comprend les pourcentages en poids en agents colorants suivants, la quantité totale de fer étant exprimée sous forme de $Fe_2O_3$:

| | |
|---|---|
| $Fe_2O_3$ | 0.88 à 0.98 % |
| FeO | 0.22 à 0.25 % |
| Co | 0.0003 à 0.0011 % |
| $Cr_2O_3$ | 0.0020 à 0.0100 % |

**10.** Verre coloré selon l'une quelconque des revendications précédentes, **caractérisé en ce que** son pourcentage en poids de FeO est inférieur à 0.25.

**11.** Verre coloré selon l'une quelconque des revendications précédentes, **caractérisé en ce qu'**il présente pour une épaisseur de 5 mm une transmission lumineuse sous illuminant C (TLC5) comprise entre 50 et 70 %.

**12.** Verre coloré selon une quelconque des revendications précédentes, **caractérisé en ce qu'**il est revêtu d'une couche d'oxydes métalliques.

**13.** Verre coloré selon une quelconque des revendications précédentes, **caractérisé en ce qu'**il se présente sous forme de feuille.

**14.** Verre coloré selon la revendication 13, **caractérisé en ce qu'**il forme un vitrage pour automobile.

**Patentansprüche**

**1.** Grün gefärbtes Natron-Kalk-Glas, das aus glasbildenden Grundbestandteilen und Färbemitteln aufgebaut ist, **dadurch gekennzeichnet, daß** es folgende Färbemittel, ausgedrückt in Gew.-%-Werten:

| | |
|---|---|
| $Fe_2O_3$ | 0,7 bis 1,3% |
| FeO | 0,18 bis 0,27% |
| Co | 0 bis 0,0040% |

und Vanadium oder Chrom in den nachfolgenden Gew.-%-Werten:

| | |
|---|---|
| $V_2O_5$ | 0,0050 bis 0,1000% |
| $Cr_2O_3$ | 0,0015 bis 0,0250% |

umfaßt, und unter Lichtquelle A und für eine Glasdicke von 4 mm eine Lichtdurchlässigkeit (TLA4) zwischen 40 und 70%, eine Selektivität (SE4) von größer oder gleich 1,50 und eine UV-Strahlendurchlässigkeit (TUV4) von kleiner als 20% aufweist.

**2.** Gefärbtes Glas nach Anspruch 1, **dadurch gekennzeichnet, daß** es eine Selektivität (SE4) von größer oder gleich 1,55, vorzugsweise größer als 1,60, aufweist.

**3.** Gefärbtes Glas nach einem der vorhergehenden Ansprüche, **dadurch gekennzeichnet, daß** es eine Lichtdurchlässigkeit von mehr als 50%, vorzugsweise mehr als 55%, aufweist.

**4.** Gefärbtes Glas nach einem der vorhergehenden Ansprüche, **dadurch gekennzeichnet, daß** es eine dominierende Wellenlänge ($\lambda_D$) von kleiner als 550 nm, vorzugsweise kleiner als 520 nm, berechnet aus der spezifischen internen spektralen Durchlässigkeit eines Glases mit einer Dicke von 5 mm, aufweist.

5. Gefärbtes Glas nach einem der vorhergehenden Ansprüche, **dadurch gekennzeichnet, daß** es nicht mehr als drei Färbemittel umfaßt.

6. Gefärbtes Glas nach einem der vorhergehenden Ansprüche, **dadurch gekennzeichnet, daß** es die folgenden optischen Eigenschaften aufweist:

$$55\% < TLA4 < 70\%$$

$$30\% < TE4 < 45\%$$

$$6\% < TUV4 < 20\%$$

$$490nm < \lambda_D < 520nm$$

$$2\% < P < 10\%.$$

7. Gefärbtes Glas nach einem der vorhergehenden Ansprüche, **dadurch gekennzeichnet, daß** es die folgenden optischen Eigenschaften aufweist:

$$63\% < TLA4 < 67\%$$

$$37\% < TE4 < 41\%$$

$$11\% < TUV4 < 18\%$$

$$500nm < \lambda_D < 505nm$$

$$4\% < P < 6\%.$$

8. Gefärbtes Glas nach Anspruch 7, **dadurch gekennzeichnet, daß** es die folgenden Färbemittel, ausgedruckt in Gew.-%-Werten, umfaßt, wobei die Gesamtmenge an Eisen in Form von $Fe_2O_3$ ausgedrückt ist:

| | |
|---|---|
| $Fe_2O_3$ | 0,88 bis 0,98% |
| FeO | 0,22 bis 0,25% |
| Co | 0,0003 bis 0,0009% |
| $V_2O_5$ | 0,0200 bis 0,0400%. |

9. Gefärbtes Glas nach Anspruch 7, **dadurch gekennzeichnet, daß** es die folgenden Färbemittel, ausgedrückt in Gew.-%-Werten, umfaßt, wobei die Gesamtmenge an Eisen in Form von $Fe_2O_3$ ausgedrückt ist:

| | |
|---|---|
| $Fe_2O_3$ | 0,88 bis 0,98% |
| FeO | 0,22 bis 0,25% |
| Co | 0,0003 bis 0,0011 % |
| $Cr_2O_3$ | 0,0020 bis 0,0100%. |

10. Gefärbtes Glas nach einem der vorhergehenden Ansprüche, **dadurch gekennzeichnet, daß** der Gew.-%-Wert von FeO kleiner als 0,25 ist.

11. Gefärbtes Glas nach einem der vorhergehenden Ansprüche, **dadurch gekennzeichnet, daß** es für eine Dicke von 5 mm eine Lichtdurchlässigkeit unter Lichtquelle C (TLC5) zwischen 50 und 70% aufweist.

12. Gefärbtes Glas nach einem der vorhergehenden Ansprüche, **dadurch gekennzeichnet, daß** eine Metalloxidschicht aufgebracht ist.

13. Gefärbtes Glas nach einem der vorhergehenden Ansprüche, **dadurch gekennzeichnet, daß** es in Form eines Glasbands vorliegt.

14. Gefärbtes Glas nach Anspruch 13, **dadurch gekennzeichnet, daß** es eine Scheibe für ein Automobil ist.

**Claims**

1. Green coloured soda-lime glass composed of the main glass-forming constituents and colouring agents, **characterised in that** it contains the following percentages by weight of colouring agents:

| $Fe_2O_3$ | 0.7 to 1.3% |
|---|---|
| FeO | 0.18 to 0.27% |
| Co | 0 to 0.0040% |

and vanadium or chromium in the following percentages by weight:

| $V_2O_5$ | 0.0050 to 0.1000% |
|---|---|
| $Cr_2O_3$ | 0.0015 to 0.0250% |

and with illuminant A and for a glass thickness of 4 mm has a light transmission (TLA4) in the range of between 40 and 70%, a selectivity (SE4) higher than or equal to 1.50, and has an ultraviolet transmission (TUV4) of less than 20%.

2. Coloured glass according to any one of the preceding claims, **characterised in that** it has a selectivity (SE4) higher than or equal to 1.55, preferably higher than 1.60.

3. Coloured glass according to any one of the preceding claims, **characterised in that** it has a light transmission higher than 50%, preferably higher than 55%.

4. Coloured glass according to any one of the preceding claims, **characterised in that** it has a dominant wavelength ($\lambda_D$) less than 550 nm, preferably less than 520 nm, calculated on the basis of the specific internal spectral transmission of a glass with a thickness of 5 mm.

5. Coloured glass according to any one of the preceding claims, **characterised in that** it does not contain more than three colouring agents.

6. Coloured glass according to any one of the preceding claims, **characterised in that** it has the following optical properties:

$$55\% < TLA4 < 70\%$$

$$30\% < TE4 < 45\%$$

$$6\% < TUV4 < 20\%$$

$$490 \text{ nm} < \lambda_D < 520 \text{ nm}$$

$$2\% < P < 10\%.$$

7. Coloured glass according to any one of the preceding claims, **characterised in that** it has the following optical properties:

$$63\% < TLA4 < 67\%$$

$$37\% < TE4 < 41\%$$

$$11\% < TUV4 < 18\%$$

$$500 \text{ nm} < \lambda_D < 505 \text{ nm}$$

$$4\% < P < 6\%.$$

8. Coloured glass according to Claim 7, **characterised in that** it contains the following percentages by weight of colouring agents, the total quantity of iron being expressed in the form of $Fe_2O_3$:

| | |
|---|---|
| $Fe_2O_3$ | 0.88 to 0.98% |
| FeO | 0.22 to 0.25% |
| Co | 0.0003 to 0.0009% |
| $V_2O_5$ | 0.0200 to 0.0400%. |

9. Coloured glass according to Claim 7, **characterised in that** it contains the following percentages by weight of colouring agents, the total quantity of iron being expressed in the form of $Fe_2O_3$:

| | |
|---|---|
| $Fe_2O_3$ | 0.88 to 0.98% |
| FeO | 0.22 to 0.25% |
| Co | 0.0003 to 0.0011 % |
| $Cr_2O_3$ | 0.0020 to 0.0100%. |

10. Coloured glass according to any one of the preceding claims, **characterised in that** its percentage by weight of FeO is less than 0.25.

11. Coloured glass according to any one of the preceding claims, **characterised in that** with illuminant C and for a glass thickness of 5 mm it has a light transmission (TLC5) in the range of between 50 and 70%.

12. Coloured glass according to any one of the preceding claims, **characterised in that** it is covered with a layer of metal oxides.

13. Coloured glass according to any one of the preceding claims, **characterised in that** it is presented in sheet form.

14. Coloured glass according to Claim 13, **characterised in that** it forms a glazing for motor vehicles.